# FASCICULE DE BREVET EUROPEEN

(11) **EP 3 271 689 B1**
(45) Date de publication et mention de la délivrance du brevet: **09.01.2019**
(21) Numéro de dépôt: 16715013.5
(22) Date de dépôt: 14.03.2016
(51) Int. Cl.: G01D 4/02, H02J 7/00

(54) **SYSTÈME ÉLECTRIQUE À AUTONOMIE ÉNERGÉTIQUE ACCRUE**
ELEKTRISCHES SYSTEM MIT ERHÖHTER ENERGIEAUTONOMIE
ELECTRICAL SYSTEM WITH INCREASED ENERGY AUTONOMY

(30) Priorité: 16.03.2015 FR 1552081
(43) Date de publication de la demande: 24.01.2018
(73) Titulaire: Enerbee SAS, 38040 Grenoble (FR)
(72) Inventeur: ISSINDOU, Valentin, 38000 Grenoble (FR); DELAMARE, Jérome, 38000 Grenoble (FR); COULOMBEAU, Pierre, 38410 Saint Martin d'Uriage (FR)
(74) Mandataire: Colombo, Michel
(86) Numéro de dépôt international: PCT/FR2016/050564
(87) Numéro de publication internationale: WO 2016/146929

(56) Documents cités:
- WO-A1-2014/006838
- US-A- 6 026 000
- US-A1- 2009 190 379
- US-A1- 2014 265 582
- CHENG WING LING ET AL: "Design considerations in medium-power biomechanical energy harvesting circuits", 2014 IEEE INTERNATIONAL CONFERENCE ON INFORMATION AND AUTOMATION (ICIA), IEEE, 28 juillet 2014 (2014-07-28), pages 783-788, XP032667864, DOI: 10.1109/ICINFA.2014.6932758

## Description

L'invention concerne un système électrique et un dispositif de mesure comportant ce système électrique.

Il existe des systèmes électriques qui sont alimentés en énergie électrique de manière autonome, c'est-à-dire qu'ils ne sont typiquement pas raccordés à un réseau de distribution d'énergie. Par exemple, il s'agit de capteurs autonomes sans fil, tels que des compteurs intelligents d'eau à usage domestique ou industriel.

Ces systèmes nécessitent typiquement un générateur d'électricité in situ. Ces systèmes sont souvent complexes et comprennent de nombreux éléments qui sont parfois installés hors de portée. Dans ces situations, la maintenance du système est compliquée et coûteuse si, par exemple, un remplacement de batterie déchargée devenait nécessaire. Il est donc souhaitable de ne pas remplacer la batterie pendant toute la durée de vie du système afin de réduire les coûts de maintenance et d'éliminer les déchets associés.

C'est dans ce contexte que des générateurs d'électricité équipés de récupérateur d'énergie ont été proposés. La récupération d'énergie (« energy scavenging » en langue anglaise) est basée sur l'utilisation de sources d'énergie disponibles gratuitement dans l'environnement telles que la lumière, les changements de température, les vibrations mécaniques ou autres, pour générer de l'électricité. Pour cette conversion, on utilise un convertisseur d'énergie.

Le brevet US-7747415-B1 (Churchill et al) décrit un système pour enregistrer des événements mesurés par un capteur, ce système étant alimenté par un dispositif à récupération d'énergie. Dans ce système, un générateur génère une impulsion en réponse à un événement détecté par un capteur. Cette impulsion est utilisée pour recharger une batterie électrique qui alimente une charge. Cette charge est un circuit qui comporte une mémoire numérique et un microprocesseur dont la fonction est notamment d'enregistrer des données relatives à l'événement détecté. Le système est ainsi alimenté uniquement à partir de l'énergie contenue dans les impulsions générées.

Un inconvénient de ce système est qu'il présente une autonomie en énergie réduite.

Un tel manque d'autonomie est fortement rédhibitoire dans des applications où le système doit fonctionner de manière totalement autonome pendant des durées prolongées et doit présenter une fiabilité satisfaisante, par exemple pour enregistrer tous les événements.

Par exemple, dans le cas d'un compteur d'eau, des contraintes techniques et économiques font que ce compteur ne peut pas toujours être alimenté par le réseau électrique. Dans ce cas, il doit fonctionner de manière autonome en énergie. Il est alors primordial que les mesures et leur conservation soient réalisées avec un haut niveau de fiabilité, puisque les données mesurées sont ensuite utilisées pour estimer la consommation du client et la lui facturer. Il n'est pas acceptable de perdre des données ou de ne pas enregistrer une partie de la consommation parce que la batterie est vide.

De l'état de la technique est également connu de :
- Cheng Wing Ling et Al : « Design considérations in medium-power biomechanical energy harvesting circuits », 2014 IEEE International Conférence on Information and automation (ICIA), IEEE 28/07/2014, pages 783-788,
- US2009/190379A1,
- WO2014/006838A1,
- US6026000A.

Il existe donc un besoin pour un tel système électrique présentant une autonomie énergétique accrue, tout en conservant une bonne simplicité de réalisation.

L'invention concerne donc un système électrique conforme à la revendication 1.

Les inventeurs ont découvert que l'autonomie réduite de tels systèmes électriques était due à la présence de courants électriques de fuite à travers le circuit de traitement. Par exemple, dans le système du brevet US-7747415-B1, la gestion de la batterie est assurée par un circuit de traitement qui n'alimente le microprocesseur que lorsque la batterie contient une quantité d'énergie suffisante. Ce circuit comporte un comparateur formé d'un pont diviseur de tension (qui porte la référence 56 sur la figure la de ce brevet) et d'un transistor qui connecte ou déconnecte sélectivement l'alimentation du microprocesseur par la batterie (« switching transistor 54 » col. 4 lignes 13-26). De fait, il existe un courant électrique qui traverse en permanence le pont diviseur de tension et qui décharge en permanence la batterie, même lorsqu'elle n'alimente pas le microprocesseur.

Dans le système électrique revendiqué, le générateur secondaire permet d'alimenter électriquement le circuit de traitement à partir des seules impulsions générées par le générateur primaire, sans avoir besoin de prévoir une autre source d'énergie pour ce générateur. En raccordant électriquement ce générateur secondaire au générateur primaire uniquement par l'intermédiaire du transformateur, on réduit considérablement les pertes énergétiques du système. En effet, si le circuit secondaire était raccordé directement au générateur primaire pour son alimentation, par exemple par l'intermédiaire d'un connecteur ohmique ou d'un transistor, il apparaîtrait des courants de fuite. Ici, le transformateur joue le rôle d'isolation galvanique et réduit l'apparition de tels courants de fuite.

Dans le cas où le circuit de traitement mesure et compare la tension aux bornes de la batterie pour commander le basculement de la charge, il a besoin d'être connecté électriquement à la batterie pour faire cette mesure. En alimentant ce circuit de traitement uniquement par l'intermédiaire du générateur secondaire il est possible de connecter le circuit de traitement à la batterie uniquement lorsqu'une impulsion est générée. Le reste du temps, ce circuit est alors déconnecté de cette batterie ce qui empêche de décharger inutilement cette batterie.

Au contraire, si le circuit de traitement était connecté en permanence à la batterie, comme dans le document US-7747415-B1 précédemment cité, alors les courants de fuite qui apparaissent inévitablement dans le pont diviseur de tension de ce circuit déchargerait la batterie. Ici, la batterie est électriquement isolée, la plupart du temps, du circuit de traitement et de la charge à alimenter. Par conséquent, la batterie ne peut pas se décharger à travers le circuit de traitement entre deux impulsions. Cela permet donc d'augmenter considérablement la durée de fonctionnement de la batterie. Il y a alors moins de risques qu'une opération de maintenance doive être menée sur le système pour remplacer la batterie ou bien que le système cesse de fonctionner à un moment critique parce que la batterie est vide. La fiabilité du système en est ainsi augmentée.

Les modes de réalisation de l'invention peuvent présenter une ou plusieurs des caractéristiques des revendications dépendantes.

Ces modes de réalisation présentent en outre les avantages suivants :
- Le fait que la consommation électrique du circuit de traitement soit supérieure à 0,5 fois l'énergie électrique d'une impulsion du générateur secondaire permet de basculer rapidement et automatiquement ce circuit de traitement vers un état inactif sans pour cela avoir recours à un dispositif de commande complexe. Ici, c'est simplement l'absence d'énergie à consommer qui ramène le circuit de traitement vers son état inactif.

Selon un autre aspect, l'invention concerne un dispositif de comptage pour mesurer la quantité d'un fluide circulant dans une conduite et incorporant le système électrique revendiqué.

L'invention sera mieux comprise à la lecture de la description qui va suivre, donnée uniquement à titre d'exemple non limitatif et faite en se référant aux dessins sur lesquels :
- la figure 1 est une illustration schématique d'un compteur pour mesurer la consommation d'un fluide, ce compteur comportant un système électrique ;
- la figure 2 est une illustration schématique d'un générateur d'impulsions électriques du système électrique de la figure 1 ;
- la figure 3 est une illustration schématique d'un schéma électrique du système électrique de la figure 1 ;
- la figure 4 est une illustration schématique d'un autre mode de réalisation du système de la figure 3.

Dans ces figures, les mêmes références sont utilisées pour désigner les mêmes éléments.

Dans la suite de cette description, les caractéristiques et fonctions bien connues de l'homme du métier ne sont pas décrites en détails.

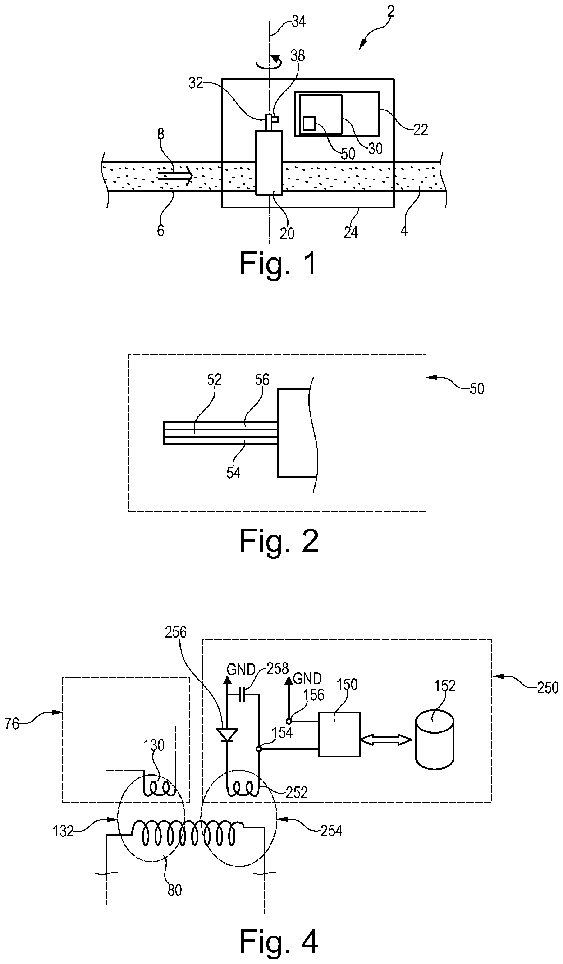

La figure 1 représente un dispositif 2 de comptage, aussi nommé compteur, pour mesurer la quantité de fluide 4 qui transite à l'intérieur d'une canalisation 6 (aussi nommée « conduite ») au cours du temps. Par exemple, il s'agit d'un compteur d'eau (« water meter » en langue anglaise) à usage domestique ou industriel et qui sert à mesurer la consommation en eau d'un abonné. Par exemple, le fluide 4 est de l'eau.

Dans cette description, par « quantité » du fluide 4, on désigne un volume de ce fluide 4 mesuré dans des conditions normales de température et de pression, par exemple à une température de 20°C et sous une pression d'une atmosphère terrestre.

Le compteur 2 est ici apte à mesurer la consommation sous forme électronique, en vue de faciliter des opérations ultérieures de collecte et de facturation de cette consommation, par un gestionnaire du réseau de distribution du fluide 4. Un tel compteur 2 est généralement connu sous le nom de compteur intelligent (« smart meter » en langue anglaise). De fait, le compteur 2 consomme de l'électricité lorsqu'il fonctionne, à la différence des compteurs mécaniques typiquement connus.

Les compteurs intelligents sont généralement aptes à fonctionner de manière autonome en énergie, notamment pour en faciliter la maintenance ou pour en réduire le coût d'installation. Par autonome, on entend ici que le compteur 2 n'est pas raccordé à un réseau de distribution électrique (« power grid » en langue anglaise) pour assurer son alimentation en énergie. De tels compteurs comportent généralement une batterie électrique. Le compteur 2 est ici apte à utiliser une partie de l'énergie mécanique qui résulte du déplacement du fluide 4 pour assurer sa propre alimentation électrique, comme on le verra plus en détail dans ce qui suit.

Ici, le fluide 4 s'écoule dans la canalisation 6 depuis une source, telle qu'un réservoir, à destination d'un point de livraison client (non illustré sur la figure 1). Le fluide 4 ne s'écoule donc, en fonctionnement normal, que suivant un seul sens, qui est illustré sur la figure 1 par la flèche 8.

Le compteur 2 comporte ici :
- un débitmètre 20, qui mesure le volume de fluide 4 qui circule dans la conduite 6 pendant une durée prédéfinie ;
- un système 22 électrique, qui a ici pour rôle de mémoriser la valeur du volume de fluide 4 mesurée par le débitmètre 20 en vue de la restituer ultérieurement ;
- un boîtier 24 de protection qui entoure le débitmètre 20 et le système 22.

Dans cet exemple, le débitmètre 20 comporte une pièce mécanique mobile apte à être mise en mouvement , avec une amplitude prédéterminée, en réponse à un déplacement d'une quantité prédéterminée de fluide 4 dans la conduite 6 au travers du débitmètre 20.

Le système 22 comporte quant à lui un générateur 30 d'impulsions qui génère des impulsions électriques en réponse au déplacement de la pièce mécanique mobile. Ainsi, la quantité de fluide mesurée peut être enregistrée par le système 22 en comptabilisant le nombre d'impulsions générées par le générateur 30, comme on le verra plus loin.

Le débitmètre 20 est ici un débitmètre mécanique à turbine, par exemple spécifiquement adapté pour mesurer un débit du fluide 4. Ce débitmètre 20 est ici décrit à titre illustratif. De façon générale, l'homme du métier sait qu'il existe des normes spécifiques qui gouvernent la réalisation de tels dispositifs. Aussi, l'homme du métier sait adapter le débitmètre 20, par exemple pour tenir compte de fonctionnalités de lutte contre la fraude, ou pour tenir compte de la nature du fluide 4.

Dans cet exemple, la pièce mobile est un rotor 32 mobile en rotation autour d'un axe 34 de rotation. Le rotor 32 plonge au travers de la canalisation 6 et se déplace en rotation autour de son axe 34 par rapport à la conduite 6. L'axe 34 est ici vertical et s'étend perpendiculairement à la conduite 6. La portion du rotor 32 qui est immergée à l'intérieur de la canalisation 6 comprend une pluralité de pales (non illustrées) qui s'étendent radialement par rapport au corps du rotor 32. Des joints d'étanchéité (non illustrés sur la figure 1) assurent l'étanchéité au fluide 4 entre le rotor 32 et la conduite 6.

Le rotor 32 comporte en outre un aimant 38 permanent, fixé au rotor 32 solidairement et sans degré de liberté. Par exemple, l'aimant 38 tourne sur lui-même autour de l'axe 34 lorsque le rotor 32 tourne, avec la même périodicité que le rotor 32. Autrement dit, l'aimant 38 effectue un tour complet autour de l'axe 34 à chaque fois que le rotor 32 effectue un tour complet sur lui-même.

Le débitmètre 20 est dimensionné de façon à ce que le rotor 32 effectue un tour complet autour de l'axe 34 à chaque fois qu'une quantité prédéterminée de fluide 4 s'est déplacé dans la conduite 6 en traversant la section de conduite 6 dans laquelle le rotor 32 s'étend. Cette quantité prédéterminée est par exemple égale à 1 litre ou à 0,1 litre.

Le générateur 30 comporte ici un convertisseur d'énergie 50 (figure 2), qui transforme en énergie électrique le travail mécanique associé au déplacement de l'aimant 38. À cet effet, le convertisseur 50 comporte ici un transducteur magnétique associé à un transducteur électromécanique. Le convertisseur 50 est placé en regard du débitmètre 20 de façon à ce que l'aimant 38 tourne en face du convertisseur 50.

La figure 2 représente plus en détail ce convertisseur 50. Le transducteur magnétique est ici une couche 52 d'un matériau magnétostrictif. Le transducteur électromécanique comporte ici des couches inférieure 54 et supérieure 56 d'un matériau piézo-électrique, disposées de part et d'autre de la couche 52. Les couches 54 et 56, sont fixées respectivement sur des faces inférieures et supérieures de la couche 52, directement et sans aucun degré de liberté.

La couche 52 est ici réalisée dans un matériau magnétostrictif dont la valeur absolue du coefficient de magnétostriction λₛ est supérieure à 10 ppm (partie par million) et de préférence supérieure à 100 ou 1000 ppm. Le coefficient λₛ est défini par la relation suivante : λₛ = ΔL/L, où ΔL est le taux d'élongation du matériau magnétostrictif dans une direction où l'élongation est maximale, et L est la longueur de ce matériau dans cette direction en absence de champ magnétique extérieur. Ce coefficient λₛ est ici positif. Par exemple, le matériau magnétostrictif est le Terfenol-D ou le FeSiB.

Les couches piézoélectriques 54, 56 sont directement collées de part et d'autre de la couche 52. Par exemple, le coefficient de couplage k de ces couches piézoélectriques est supérieur à 5 % ou 10 %. Ce coefficient de couplage est défini dans la norme ANSI/IEEE 176-1987 « ANSI/IEEE standard on piezoelectricity » ou dans les normes de la famille EN50324. Par exemple, le matériau piézoélectrique utilisé est le PZT (PbZtₓTi₁₋ₓO₃) ou autres.

Un exemple d'un tel convertisseur 50 est décrit dans l'article de T. Lafont et al, « Magnetostrictive-piezoelectric composite structures for energy harvesting », Journal of micromechanics and microengeneering, vol. 22, 094009, août 2012.

La couche 52 permet de générer une contrainte de plusieurs dizaines de MPa sur les couches piézoélectriques 54 et 56 qui génèrent, en réponse, une impulsion d'une tension de plusieurs dizaines de volts. Typiquement, la tension maximale générée dépasse 200 Vdc. Il a été mesuré que l'énergie produite par un tel convertisseur 50 peut être supérieure à 50 µJ et, de préférence, supérieure à 100 µJ en réponse à une rotation d'un quart de tour de l'aimant 38.

Ainsi, lorsque du fluide 4 circule dans la conduite 6, il entraîne en rotation le rotor 32. Le plateau 40 tourne alors solidairement avec le rotor 32 autour de l'axe 34, et avec lui, l'aimant 38. Cette rotation se déroule continûment, au fur et à mesure que le fluide 4 circule. Lorsque le fluide 4 cesse de circuler dans la conduite 6, le rotor 32 arrête de tourner. Le rotor 32 reprend ensuite sa rotation dès que le fluide 4 circule à nouveau dans la conduite 6.

Le déplacement de l'aimant 38 devant le convertisseur 50 provoque une variation du champ magnétique subi par la couche 52, ce qui entraîne la déformation de cette couche 52, du fait de ses propriétés magnétostrictives. En réponse à cette déformation, les couches 54 et 56, qui sont collées à la couche 52, se déforment également. Grâce à leurs propriétés piézo-électriques, elles génèrent alors une impulsion électrique qui est finalement délivrée par le générateur 30.

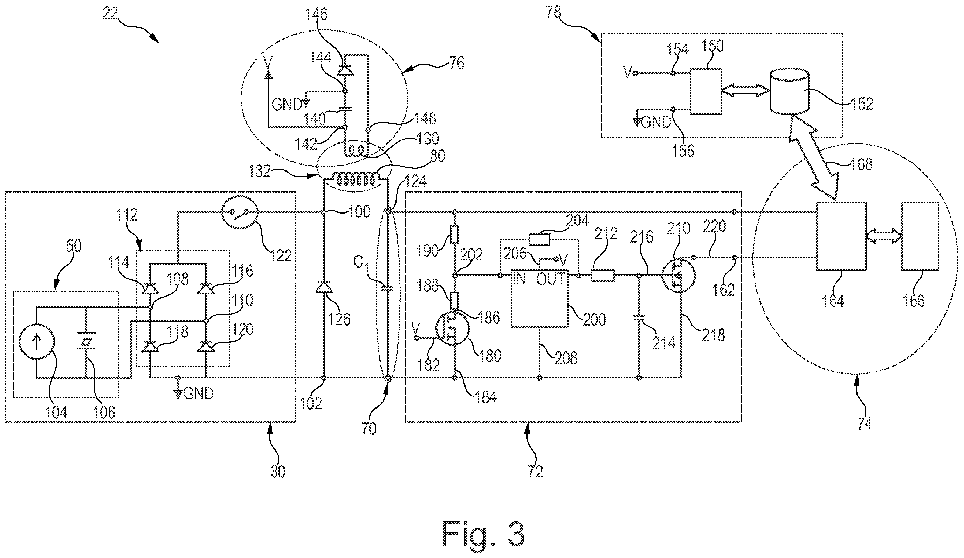

La figure 3 représente plus en détail un exemple de réalisation du système 22. Le système 22 comporte ici :
- le générateur 30, aussi dit « générateur primaire » ;
- une batterie électrique 70 rechargeable ;
- un premier circuit 72 de traitement, apte à réaliser une opération en réponse à chaque impulsion générée par le générateur 30 ;
- une charge électrique 74 ;
- un générateur secondaire 76 d'impulsions ;
- un second circuit 78 de traitement, apte à réaliser une autre opération, en réponse à chaque impulsion générée par le générateur 30 ;
- une inductance 80.

Dans cette description, sauf précision contraire, les termes « raccordé électriquement » et « connecté électriquement » indiquent qu'un élément est connecté électriquement directement à un autre élément. Par directement, on entend que cette connexion est réalisée au moyen d'un conducteur électrique, tel qu'un fil ou une piste de circuit imprimé, et que cette connexion ne comporte aucun autre composant tel qu'un condensateur ou une inductance interposé entre ces deux éléments.

Le générateur 30 comporte ici des bornes de raccordement 100, 102 entre lesquelles il est apte à délivrer les impulsions électriques générées par le convertisseur 50. La borne 102 est ici raccordée électriquement à une masse électrique GND du système 22.

Dans ce qui suit, les impulsions générées par le convertisseur 50 du générateur 30 seront nommées « impulsions primaires ».

Dans cet exemple, le convertisseur 50 est modélisé par un générateur idéal de courant 104 connecté électriquement en parallèle avec un transducteur piézoélectrique 106. Des bornes 108, 110 de sortie de ce convertisseur 50 sont raccordées électriquement à un pont redresseur 112. Le pont 112 comporte des diodes 114, 116, 118 et 120, ici identiques entre elles. Par exemple, il s'agit des diodes de redressement commercialisées sous la référence « 1N-4004 ». Le pont 112 est connecté électriquement d'un côté, directement à la masse GND et, de l'autre côté, à la borne 100 par l'intermédiaire d'un interrupteur commandable 122. Le pont 112 empêche que la batterie 70 ne se décharge dans le générateur 30.

L'interrupteur 122 peut commuter entre des positions ouverte et fermée. L'interrupteur 122 est ici un interrupteur magnétique à lame souple, aussi connu sous le nom d'interrupteur reed (« reed switch » en langue anglaise). La commutation de l'interrupteur 122 est gouvernée par les variations de champ magnétique créées par le déplacement de l'aimant 38. L'interrupteur 122 concourt ainsi à la génération des impulsions primaires.

Par exemple, ce générateur 30 est décrit plus en détail quant à sa structure et son fonctionnement dans la demande internationale WO2014/063951.

La batterie 70 est capable de stocker une quantité d'énergie électrique plusieurs fois supérieure à la quantité d'énergie électrique contenue dans une seule impulsion primaire. La batterie 70 est ici raccordée électriquement aux bornes 100 et 102 pour collecter au moins une partie de l'énergie électrique des impulsions primaires et ainsi accumuler l'énergie qu'elles contiennent. Par exemple, la batterie 70 est apte à stocker une quantité d'énergie comprise entre 50mJ et 50J. Dans cet exemple, la batterie 70 est un condensateur C1 d'une capacité de 10µF.

Plus précisément, la batterie 70 est ici connectée électriquement entre la borne 102 et une borne 124. La borne 124 est raccordée électriquement à la borne 100 par l'intermédiaire de l'inductance 80. De cette manière, les impulsions primaires circulent d'abord au travers de l'inductance 80 avant d'atteindre la batterie 70. Une diode 126 est connectée électriquement entre les bornes 100 et 102 du générateur pour servir de diode de roue libre (« flyback diode » en langue anglaise). La cathode et l'anode de la diode 126 sont raccordées électriquement, respectivement, entre les bornes 100 et 102.

Le générateur 76 comporte une inductance 130 qui est électriquement raccordée aux circuits 72 et 78. L'inductance 130 est couplée magnétiquement avec l'inductance 80 pour former un transformateur 132. Ce transformateur 132 est ainsi apte à transférer vers le générateur 76 une partie de l'énergie électrique contenue dans une impulsion primaire.

Avantageusement, les inductances 130 et 80 sont configurées pour que l'énergie transférée par le transformateur 132 soit tout juste suffisante pour alimenter en énergie électrique les circuits 72 et 78 pour qu'ils réalisent leurs opérations respectives, comme on le verra dans ce qui suit. La quantité d'énergie électrique transférée par le transformateur 132 peut être contrôlée en modifiant le nombre de spires des enroulements des inductances 80 et 130.

Par exemple, le nombre de spires de l'enroulement de l'inductance 80 est supérieur ou égal à cinq ou dix ou vingt ou cent fois le nombre de spires de l'enroulement de l'inductance 100.

Ainsi, le générateur 76 fournit une tension d'alimentation V aux circuits 72 et 78, sous forme d'impulsions. Dans ce qui suit, ces impulsions générées par le générateur 76 seront nommées « impulsions secondaires ». Dans cet exemple, cette tension V est avantageusement comprise entre 0,5V et 5V.

Par exemple, l'inductance 80 est un enroulement d'un matériau électriquement conducteur. Cet enroulement présente une inductance égale à 2,5mH. L'inductance 132 est également un enroulement, par exemple autour de l'inductance 80, qui a une valeur d'inductance égale à 10µH. La valeur de l'inductance 80 est choisie en fonction notamment des caractéristiques de l'interrupteur 122, du transducteur 106 et du condensateur C₁. Par exemple, la valeur de l'inductance 80 est comprise entre 50µH et 50mH.

Ainsi, au moins une partie de l'alimentation électrique du système 22 est réalisée en récupérant l'énergie mécanique du mouvement de rotation du rotor 32. On parle alors de « récupération d'énergie » (« energy scavenging » en langue anglaise).

Le générateur 76 comporte un condensateur 140 apte à stocker de l'énergie contenue dans la partie des impulsions primaires qui est transférée par le transformateur 132 vers l'inductance 130. La quantité d'énergie électrique transférée par le transformateur 132 peut également être contrôlée en modifiant la valeur de la capacité du condensateur 140. Généralement, la capacité de stockage d'énergie de ce condensateur 140 est strictement inférieure à la quantité d'énergie contenue dans une seule impulsion générée par le générateur 30. Ainsi, une impulsion secondaire est toujours générée par le générateur 76 en réponse à une impulsion primaire.

Ici, l'énergie électrique consommée par les circuits 72 et 78 est suffisante pour décharger complètement le condensateur 140 avant que le générateur 30 génère l'impulsion suivante.

Par exemple, la consommation électrique des circuits 72 et 78 nécessaire pour qu'ils exécutent chacun complètement les opérations qu'ils ont à réaliser en réponse à une impulsion primaire est comprise entre Emax et α*Emax, où :
- α est une constante supérieure à 0,5 ou 0,7 ou 0,8, et
- Emax est la quantité maximale d'énergie contenue dans une impulsion secondaire.

Ici, la quantité Emax est égale à 100nJ.

Par exemple, le condensateur 140 est connecté électriquement entre une borne 142 de l'inductance 130 et une borne 144 raccordée électriquement à la masse GND. L'autre borne 146 du condensateur 140 est connectée électriquement à la borne 144 par l'intermédiaire d'une diode 146 qui empêche le condensateur 142 se décharger dans l'inductance 130. La cathode de la diode 146 est connectée électriquement à la seconde borne 148 de l'inductance 130. La borne 142 fournit la tension d'alimentation V vers le reste du système 22.

La valeur précise de la capacité du condensateur 140 dépend de la quantité d'énergie que l'on souhaite récupérer. Dans cet exemple, le condensateur 140 présente une capacité de 20nF.

Le circuit 78 a pour but de comptabiliser le nombre d'impulsions générées par le générateur 30. À cet effet, le circuit 78 comporte un enregistreur 150 et une mémoire 152 non volatile. Ce circuit 78 et alimenté électriquement uniquement au moyen du générateur 76. Par exemple, le circuit 78 comporte des bornes d'alimentation 154 et 156 qui sont respectivement connectées électriquement à la borne 142 et à la masse GND. Sur la figure 3, cette connexion est indiquée par la mention du potentiel V.

Le circuit 78 est apte à basculer, en réponse et à chaque fois qu'il reçoit une impulsion secondaire, entre :
- un état inactif, dans lequel il ne fonctionne pas et ne consomme pas d'énergie électrique, et
- un état actif.

Dans l'état actif, le circuit 78 est alimenté uniquement par l'impulsion secondaire. Il est alors apte à enregistrer des données à l'intérieur de la mémoire 152 avant de basculer à nouveau dans l'état inactif. Par exemple, à chaque fois qu'une impulsion secondaire est reçue sur la borne 154, l'enregistreur 150 incrémente d'un pas prédéterminé un compteur d'impulsions puis stocke la valeur incrémentée du compteur dans la mémoire 152.

Comme le générateur 76 génère une seule impulsion secondaire en réponse à chaque impulsion primaire, ce compteur permet de savoir combien d'impulsions primaires ont été générées depuis un instant initial. De cette manière, on connaît la quantité de fluide 4 qui s'est déplacée dans la conduite 6 depuis cet instant initial.

La mémoire 152 est ici une mémoire numérique non-volatile, par exemple de type Flash ou EEPROM. Elle présente une capacité de stockage par exemple supérieure ou égale à 16 octets ou à 256 octets ou à 1 kilo-octet ou à 512 kilo-octets. Pour simplifier, le détail du circuit d'alimentation et de pilotage de cette mémoire 152 n'est pas illustré sur la figure 3.

La charge 74 est apte à basculer de façon réversible entre :
- un état alimenté, dans lequel elle consomme l'énergie stockée dans la batterie 70 pour assurer son fonctionnement, et
- un état de veille, dans lequel elle est électriquement isolée de la batterie 70 et ne consomme pas l'énergie de cette batterie 70.

Le basculement du circuit 74, entre ses états alimenté et de veille, est commandé par le circuit 72, en fonction notamment de l'état de charge de la batterie 70. À cet effet, des bornes d'alimentation 160, 162 du circuit 74 sont connectées électriquement à la batterie 70 par l'intermédiaire du circuit 72. Le fonctionnement de ce circuit 72 sera décrit plus en détail dans ce qui suit.

Ici, la charge 74 est un circuit de traitement des données contenues dans la mémoire 152. Ce circuit 74 permet notamment à un utilisateur d'accéder au nombre d'impulsions dénombrées par le compteur de la mémoire 152. Là encore, dans un souci de simplification, le circuit 74 est décrit seulement sous forme fonctionnelle.

À cet effet, le circuit 74 comporte un microprocesseur 164 et une interface de communication 166. Le microprocesseur 164 est apte à accéder automatiquement aux données enregistrées dans la mémoire 152 et à traiter ces données, uniquement lorsqu'il est dans l'état alimenté. Le microprocesseur 164 accède à la mémoire 152 au moyen d'un bus de données 168. Ce bus 168 comporte ici une connexion filaire avec la mémoire 152.

Par exemple, le microprocesseur 164 envoie sur le bus 168 une requête vers la mémoire 152 pour obtenir la valeur que présente, à un instant donné, le compteur d'impulsions de la mémoire 152. Cette valeur est ensuite retournée vers le microprocesseur 164, toujours au moyen du bus 168.

Le microprocesseur 164 achemine ces données vers l'interface 166 pour qu'elles puissent être collectées par un utilisateur. Par exemple, l'interface 166 comporte un émetteur-recepteur radio apte à échanger des données avec une station distante de collecte de données (non illustrée sur la figure 3).

Comme la collecte de données n'a pas besoin d'être réalisée en continu, le circuit 74 n'est pas alimenté électriquement en permanence. Au contraire, il n'est alimenté que quand cela est nécessaire. On évite ainsi de décharger la batterie 70, ce qui se produirait immanquablement si le circuit 74 et est alimenté en permanence.

Le circuit 72 est raccordé électriquement à la batterie 70 au moyen des bornes 102 et 124. Le circuit 72 est apte à :
- mesurer la tension électrique entre les bornes 124, 102 de la batterie 70 ;
- comparer cette valeur mesurée avec un seuil de tension Vₛ prédéterminé, et à
- autoriser le basculement du circuit 74 depuis son état de veille vers son état alimenté uniquement si la tension mesurée est supérieure ou égale au seuil Vₛ.

Dans le cas contraire, le circuit 72 n'autorise pas le basculement du circuit 74 vers l'état alimenté. Le circuit 74 reste donc dans son état de veille tant que la tension mesurée est inférieure au seuil Vₛ.

Le circuit 72 est en outre électriquement raccordé au condensateur 140 pour être alimenté par l'énergie stockée dans ce condensateur 140. Le circuit 72 est raccordé électriquement à la batterie 70, mais uniquement pour mesurer la tension aux bornes de celle-ci. Le circuit 72 n'est pas apte à être alimenté électriquement par la batterie 70. Par « alimenté électriquement », on désigne ici l'énergie électrique qui est fournie au circuit 72 pour qu'il consomme cette énergie afin d'assurer son propre fonctionnement. De l'énergie électrique qui transiterait au travers du circuit 72 depuis la batterie 70 n'est ici pas considérée comme alimentant électriquement le circuit 72. Le circuit 72 est alimenté électriquement uniquement à partir de l'énergie électrique contenue dans les impulsions secondaires. Ainsi, le circuit 72 est alimenté électriquement à partir des impulsions primaires, tout en étant isolé galvaniquement du générateur 30. De cette façon, on évite que le circuit 72 ne décharge la batterie 70 lorsqu'il fonctionne. Ainsi, l'autonomie du système 22 est augmentée.

Dans cet exemple, le circuit 72 comporte un interrupteur 180 commandable, qui est apte à commuter :
- entre un état ouvert, dans lequel il isole électriquement le circuit 72 d'au moins une des bornes de la batterie 70, et
- un état fermé, dans lequel il raccorde électriquement le circuit 72 aux bornes de la batterie 70. Dans cet état fermé, le circuit 72 est alors apte à mesurer la tension aux bornes de cette batterie.

L'interrupteur 180 comporte une électrode 182 de commande. Il commute depuis son état ouvert vers son état fermé en réponse à la réception, sur cette électrode 182, d'une quantité d'énergie qui est inférieure à celle stockable dans le condensateur 140. Cette électrode 182 est électriquement connectée à la borne 142 du générateur 76. Ainsi, la commutation depuis l'état ouvert vers l'état fermé est déclenchée lors que la tension entre les bornes du condensateur 140 dépasse un seuil prédéterminé.

A l'inverse, la commutation depuis l'état fermé vers l'état ouvert se produit automatiquement quand la tension entre les bornes du condensateur 140 redescend en-dessous de ce seuil. Dès lors, puisque la charge du condensateur 140 est provoquée par la génération d'une impulsion primaire, la commutation vers l'état fermée est automatiquement déclenchée en réponse à la génération d'une impulsion primaire. La commutation vers l'état ouvert est également automatiquement provoquée par la consommation, par les circuits 72 et 78, de l'énergie stockée dans le condensateur 140.

Ainsi, dans ces conditions, presque immédiatement après la fin d'une impulsion secondaire, l'alimentation des circuits 72 et 78 cesse automatiquement et l'interrupteur 180 commute vers son état ouvert puisqu'il n'y a plus d'énergie à consommer.

Par exemple, l'interrupteur 180 est un transistor, tel qu'un transistor métal-oxyde-semiconducteur (MOS) à effet de champ, de type N et à enrichissement (« n-channel enhancement mode MOSFET transistor » en langue anglaise). L'électrode 182 correspond ainsi à la grille du transistor 180. Une source 184 du transistor est raccordée à la masse GND. Un drain 186 du transistor 180 est relié électriquement à la borne 124 par l'intermédiaire de deux résistances électriques 188 et 190 connectés en série l'une avec l'autre pour former un pont diviseur de tension. Les valeurs des résistances 188 et 190 sont ici choisies en fonction de la valeur de tension électrique qu'on souhaite obtenir. De préférence, ces valeurs de résistances sont supérieures à 10kΩ ou à 100kΩ ou à 1MΩ, de manière à réduire la consommation d'énergie lors d'une impulsion. Par exemple, ces résistances 188 et 190 sont ici, respectivement, égales à 2MQ et à 10MΩ.

Le circuit 72 comporte en outre un comparateur 200 électronique. Ce comparateur 200 est apte à comparer la tension électrique reçue sur une entrée IN avec une valeur de référence. Ici, cette référence et le seuil Vₛ. Si la tension reçue sur son entrée IN est supérieure ou égale le seuil Vₛ, alors ce comparateur délivre, sur une broche de sortie OUT, une tension électrique à une valeur prédéfinie. Dans le cas contraire, il ne délivre pas cette tension électrique.

L'entrée IN est raccordée électriquement à un point 202 intermédiaire situé entre les résistances 188 et 190. Ainsi, la tension électrique reçue sur l'entrée correspond à la tension aux bornes de la batterie 70 divisée par un facteur constant dont la valeur est fixée par les résistances 188 et 190. C'est cette tension qui permet de déterminer l'état de charge de la batterie 70. La batterie 70 est dite présenter un état de charge suffisant pour alimenter le circuit 74 uniquement si cette tension mesurée est supérieure ou égale au seuil Vₛ.

Une résistance 204 est en outre connectée électriquement entre les bornes IN et OUT, en parallèle du comparateur 200. Cette résistance 204 a ici une valeur de 16 MΩ. Cette résistance 204 permet d'amener une hystérésis de sorte à éviter un déclenchement intempestif du comparateur 200.

Le comparateur 200 est alimenté électriquement uniquement par le générateur 76. À cet effet, des broches d'alimentation 206 et de masse 208 du comparateur 200 sont raccordées électriquement, respectivement, à la borne 142 et à la masse GND.

Par exemple, le comparateur 200 est le composant électronique connu sous la référence « LT6700-3 » et commercialisé par la société « Linear Technology » (Milpitas, Californie, USA).

Le basculement du circuit 74 entre ses états alimenté et en veille est commandé en fonction de la tension délivrée sur la sortie OUT du comparateur 200. A cet effet, le circuit 74 comporte un interrupteur 210 commandable. Cet interrupteur 210 peut commuter entre :
- un état fermé, dans lequel il raccorde électriquement la borne 162 du circuit 74 à la masse GND, et
- un état ouvert, dans lequel il isole électriquement la borne 162 de la masse GND.

En sortie du comparateur 200, se trouve un circuit RC qui comporte une résistance 212 et un condensateur 214 connectés en série l'un avec l'autre entre la sortie OUT et la masse GND. Ce circuit RC permet de régler le temps d'ouverture de l'interrupteur 210. Ce réglage est effectué en choisissant les valeurs de la résistance 204 et du condensateur 214. Un point intermédiaire entre la résistance 212 et le condensateur 214 est connecté électriquement à une électrode 216 de commande de l'interrupteur 210. La tension électrique délivrée par le comparateur 200 sur la sortie OUT à la valeur prédéfinie forme ainsi un signal de commande de commutation de l'interrupteur 210.

Par exemple, l'interrupteur 210 est un transistor. Ici, il s'agit d'un transistor ayant les mêmes caractéristiques que le transistor 180. L'électrode 216 correspond donc à une grille de ce transistor 210. Une source 218 de ce transistor est connectée à la masse GND. Un drain 220 de ce transistor 210 est connecté électriquement à la borne 162. La borne 160 est connectée électriquement directement avec la borne 124 de la batterie 70.

Ainsi, le transistor 210 connecte et, en alternance, déconnecte sélectivement la borne 162 du reste du circuit 72. Cela permet de basculer sélectivement le circuit 74 entre ses états actif et en veille.

Un exemple de fonctionnement du système 22 va maintenant être décrit plus en détail.

Lorsqu'une impulsion primaire est générée par le circuit 30, elle traverse l'inductance 80. Une partie de l'énergie contenue dans cette impulsion est transférée par le transformateur 132 jusque dans le condensateur 140. L'autre partie de l'énergie contenue dans cette impulsion est stockée par la batterie 70. Lorsque le condensateur 140 est suffisamment chargé et qu'il ne reçoit plus d'énergie par le transformateur 132, il se décharge, générant ainsi une impulsion secondaire qui est délivrée sur la borne 142. Cette impulsion secondaire alimente à la fois le circuit 72 et le circuit 78.

Plus précisément, une partie de cette impulsion secondaire fait basculer le circuit 78 dans son état actif. Dès lors, l'enregistreur 150 est mis en marche. Il incrémente le compteur d'impulsions dans la mémoire 152 d'un pas. Immédiatement après, une fois cette opération effectuée, l'enregistreur 150 cesse de fonctionner et le circuit 78 bascule à nouveau dans son état inactif, jusqu'à ce qu'il reçoive à nouveau une impulsion secondaire.

En parallèle, une autre partie de cette impulsion secondaire entraîne la commutation du transistor 180 vers son état fermé et, simultanément, alimente le comparateur 200. Le circuit 72 mesure alors la tension aux bornes de la batterie 70 pour déterminer son état de charge. Si l'état de charge est suffisant pour alimenter le circuit 74, alors le comparateur 200 délivre le signal de commande pour commuter le transistor 210 vers son état fermé, de manière à raccorder électriquement le circuit 74 à la batterie 70.

Le circuit 74 bascule alors dans son état actif. Il peut alors accéder, tant qu'il est dans l'état actif, à la mémoire 152 pour traiter des informations enregistrées dans cette mémoire 152. En l'absence d'impulsion secondaire, le transistor 180 commute à nouveau vers son état ouvert. Le comparateur 200 ne mesure alors plus la tension aux bornes de la batterie 70. En outre, en l'absence d'impulsion secondaire, le comparateur 200 n'est plus alimenté. Dans ce cas, faute de signal de commande, le transistor 210 commute à nouveau vers son état ouvert, déconnectant ainsi le circuit 74 de la batterie 70. Le circuit 74 bascule alors à nouveau vers son état de veille.

Dans le cas où, la tension mesurée aux bornes de la batterie 70 n'est pas suffisante pour alimenter le circuit 74, alors le comparateur 200 ne délivre pas le signal de commande et le transistor 210 reste dans son état ouvert. Le circuit 74 n'est pas connecté électriquement à la batterie 70 et reste donc dans son état de veille.

Un avantage de ce système 22 est que le circuit 72 ne mesure la tension aux bornes de la batterie 70 que lorsqu'une impulsion secondaire est reçue. Le reste du temps, le circuit 72 est électriquement isolé de la batterie 70 par le transistor 180 et le transformateur 132. Ainsi, le circuit 72 ne peut pas être traversé par un courant de fuite, et donc décharger la batterie 70, entre deux impulsions primaires.

En particulier, ici, l'alimentation du circuit 72 est réalisée uniquement par l'intermédiaire du générateur 76. Le circuit 72 n'est donc connecté en permanence au générateur 30 que par l'intermédiaire du transformateur 132. La configuration du circuit 72, et notamment le fait que le transformateur 132 assure une isolation galvanique, évite l'apparition de tels courants de fuite. Il en est de même pour le circuit 78 qui est lui aussi uniquement alimenté par le générateur 76. L'énergie de la batterie 70 est donc réservée pour le fonctionnement du circuit 74.

On remarquera aussi qu'il n'est pas nécessaire de basculer le circuit 74 dans son état actif à chaque fois qu'une impulsion primaire est générée. En effet, de par le fonctionnement du compteur 2, les fonctions de comptage et d'enregistrement des impulsions primaires d'une part, et de transmission des données enregistrées d'autre part, ne sont pas forcément associées et peuvent se dérouler séparément dans le temps et indépendamment l'une de l'autre. Par exemple, un relevé de la consommation enregistrée dans la mémoire 152 peut intervenir indépendamment de l'instant auquel une impulsion primaire est générée.

On optimise ainsi la durée de vie de la batterie 70, par rapport à une configuration dans laquelle les circuits 74, 78 seraient alimentés par la batterie.

La figure 4 représente un circuit 250 apte à remplacer le circuit 78. Pour simplifier la figure 4, le système 22 n'a pas été illustré en totalité. Ce circuit 250 est par exemple identique au circuit 78 à la différence que, au lieu d'être alimenté par le générateur 76, il comporte un autre générateur d'impulsions secondaires électriquement isolé du générateur 76.

Ce circuit 250 comporte ainsi une inductance 252 qui est couplée magnétiquement avec l'inductance 80 de manière à former un transformateur 254. Le transformateur 254 est apte à transférer au moins une partie de l'énergie contenue dans une impulsion primaire traversant l'inductance 80 en direction de l'inductance 252.

Par exemple, l'inductance 252 est identique à l'inductance 130.

Une borne de l'inductance 252 est raccordée électriquement à la cathode d'une diode 256. L'anode de cette diode 256 est raccordée à la masse GND. L'autre borne de l'inductance 252 est raccordée électriquement à la borne 154 de l'enregistreur 150. Un condensateur 258 est connecté électriquement entre la borne 154 et l'anode de la diode 256. Le condensateur 258 joue le même rôle que le condensateur 140. La diode 256 évite que le condensateur 258 ne se décharge dans l'inductance 252 et ne renvoie ainsi de l'énergie vers l'inductance 80.

De nombreux autres modes de réalisation sont possibles.

En particulier, le système 22 n'est pas limité à une utilisation dans un compteur 2 et peut être utilisé dans de très nombreuses autres applications. Le système 22 peut ainsi être utilisé indépendamment du débitmètre 22. Par exemple, le système 22 peut être utilisé dans tous appareil où un aimant permanent se déplace. Typiquement, tout appareil comportant une roue sur laquelle on peut fixer un aimant permanent peut être associé au système 22. La roue est par exemple entraînée en rotation par un moteur ou tout autre type d'actionneur.

A titre d'illustration seulement, si l'aimant 38 est fixé sur le pédalier d'un vélo, le système 22 peut alors compter le nombre de tours de roue du vélo et le calculateur 164 peut en déduire une estimation de la distance parcourue.

On peut aussi associer l'aimant 38 au rotor d'une serrure électronique. Dans ce cas la rotation du rotor par une clé alimente un circuit de traitement. Ce circuit de traitement réalise alors les opérations suivantes :
- il lit un code dans la clé introduite dans la serrure, puis
- il compare ce code à une liste de codes autorisés à ouvrir la serrure, puis
- si le code lu correspond à l'un des codes autorisé, il autorise le déverrouillage de la serrure et, dans le cas contraire, il inhibe le déverrouillage de la serrure.

Le compteur 2 peut être différent.

Par exemple, le compteur 2 est adapté pour compter un fluide autre que de l'eau. Par exemple, il s'agit d'hydrocarbures. Le fluide peut aussi être un déchet liquide tel que des eaux usées. Le compteur 2 sert alors à mesurer non pas une consommation, mais plutôt à mesurer une quantité de déchets rejetés.

Le débitmètre 20 peut être différent. Il s'agit par exemple d'un débitmètre à piston ou à rotor (« rotary meter » en langue anglaise) ou de tout autre type de débitmètre du moment qu'il est apte à mettre en déplacement la partie mobile. Dans ce cas, l'aimant 38 et le générateur 30 sont placés en conséquence en fonction de la trajectoire de cette partie mobile. De façon générale, l'homme du métier sait adapter le débitmètre 20 en fonction de la nature du fluide 4.

Le système 22 peut être réalisé différemment. Par exemple, les valeurs des inductances, capacités et résistances du système 22 peuvent présenter des valeurs autres que celles décrites. De même, les niveaux de tension électrique et des valeurs de seuil peuvent être choisis différemment.

Le générateur 30 peut être différent. Par exemple, la récupération d'énergie est assurée autrement que par l'intermédiaire du déplacement de l'aimant 38. Dans ce cas, le matériau magnétostrictif 52 est omis et le convertisseur 50 est adapté en conséquence pour tirer profit d'une autre source d'énergie. Par exemple, de l'énergie thermique ambiante est utilisée pour alimenter en énergie le système 22. Le convertisseur 50 est alors remplacé par un convertisseur comportant un module thermoélectrique tel qu'une cellule à effet Peltier. Ce module recharge un dispositif de stockage d'énergie qui, une fois rechargé, se décharge pour générer une impulsion primaire.

Le générateur 30 peut aussi être un simple générateur d'impulsions raccordé en permanence à un réseau d'alimentation électrique. Par exemple, si ce générateur primaire génère des impulsions électriques à une fréquence proportionnelle à la puissance électrique consommée par des appareils électriques eux aussi alimentés par ce réseau électrique, alors le système 22 peut être utilisé pour mesurer la consommation électrique de ces appareils électriques.

En variante, le générateur 30 est configuré pour transférer l'impulsion primaire sous la forme d'un train d'impulsions. Par exemple, ce générateur comporte un interrupteur qui joue le même rôle que l'interrupteur 122 sauf que, lorsqu'une impulsion primaire est générée par le convertisseur 50, cet l'interrupteur est, successivement et de façon répétée, ouvert puis fermé, à la manière d'un hacheur. Par exemple, on utilise la technique dite de « multi-shot synchronous electric charge extraction » décrite dans l'article de P. Gasnier et al, « An Autonomous Piezoelectric Energy Harvesting IC Based on a Synchronous Multi-Shot Technique », IEEE Journal of Solid State Circuits, vol. 49, juillet 2014, DOI : 10.1109/JSSC.2014.2325555.

Ainsi, l'énergie contenue dans l'impulsion primaire est transférée non pas en une seule fois, mais en une pluralité de sous-impulsions qui présentent une amplitude réduite par rapport à l'amplitude de l'impulsion primaire, par exemple dix fois ou cent ou mille fois plus faible. Comme la quantité d'énergie contenue dans chacune des sous-impulsions est moindre que celle contenue dans l'impulsion primaire, la puissance transférée par l'inductance 80 est moindre. De fait, les contraintes sur le dimensionnement de l'inductance 80 sont réduites, ce qui simplifie la réalisation du générateur. Dans ce cas, le générateur est modifié pour incorporer un circuit pour contrôler la commutation de l'interrupteur 122.

La batterie 70 peut être réalisée différemment. En particulier, il peut s'agir d'une batterie rechargeable à accumulateurs électrochimiques, par exemple au lithium, ou d'un ou plusieurs supercondensateurs.

Le circuit 72 peut être différent. Par exemple, le circuit 72 comporte une horloge numérique qui mesure le temps qui passe. Le circuit 72 est programmé pour commander le basculement de la charge 74 entre son état alimenté et son état de veille à des instants prédéfinis du temps, mesurés par l'horloge. Cette horloge est par exemple une horloge présentant une très basse consommation électrique (typiquement inférieure à 150nA) pour éviter de décharger la batterie 70.

Selon une autre variante, le circuit 72 comporte un capteur apte à mesurer une grandeur physique environnementale telle qu'une température ou un taux d'hygrométrie. Typiquement, ce capteur est uniquement alimenté par le générateur 76. Le basculement de la charge 74 entre ses états alimenté et de veille est alors réalisé uniquement si la valeur mesurée par ce capteur appartient à une plage de valeurs prédéfinie.

En variante, le circuit 72 est également apte à réguler le niveau de charge de la batterie 70 pour éviter que ce niveau de charge ne dépasse un seuil prédéfini. Par exemple, ce niveau de charge est déterminé à partir de la tension mesurée par le comparateur 200. Lorsque ce seuil est dépassé, le circuit 72 commande la décharge partielle de la batterie 70 pour que la quantité d'énergie stockée dans la batterie 70 diminue jusqu'à repasser sous ledit seuil prédéfini. Par exemple, le circuit 72 comporte un interrupteur commandable similaire à l'interrupteur 180 qui permet sélectivement, de décharger la batterie 70 dans une résistance lorsque la tension dépasse ledit seuil et, en alternance, d'empêcher la batterie 70 de se décharger dans cette résistance. On réduit ainsi le risque de surcharge de la batterie 70, ce qui pourrait l'endommager. Par exemple, le seuil prédéfini est supérieur ou égal à 90 % ou à 95 % ou à 98 % ou 99 % de la charge maximale théorique de la batterie 70.

La charge 74 peut être différente. Par exemple, le microprocesseur 164 est omis. L'interface 166 peut alors comporter une antenne radiofréquence RFID passive directement connectée à la mémoire 152 et qui est apte à lire et à restituer le contenu de cette mémoire 152 en réponse à un signal radio qu'elle reçoit.

En variante, la charge 74 comporte une source d'énergie indépendante de la batterie 70. Par exemple, la charge 74 comporte une cellule photovoltaïque. Cette source d'énergie peut alimenter la charge 74 en complément de la batterie 70.

Le générateur 76 peut être omis, par exemple lorsque le circuit 72 est omis et que le circuit 78 est remplacé par le circuit 250.

L'inductance 80 peut être formée par une pluralité d'inductances discrètes connectées électriquement en série l'une avec l'autre.

Les interrupteurs 180 et 210 peuvent être différents. Par exemple, il s'agit de transistors de puissance à grille isolée (IGBT), de transistors bipolaires ou de relais électromécaniques. Il peut également s'agir d'interrupteurs reed qui sont alors préférentiellement positionnés de façon à ce que leur commutation soit gouvernée au moins en partie par le déplacement de l'aimant 38.

Le comparateur 200 peut être différent. Il peut s'agir d'un autre modèle de comparateur. On peut aussi utiliser à la place un transistor, qui est commandé par la tension que l'on aurait appliquée sur l'entrée IN. Ce transistor est ainsi apte à délivrer un signal pour déclencher la commutation du transistor 210 vers l'état fermé lorsque cette tension dépasse le seuil Vₛ et, en alternance, pour maintenir le transistor 210 dans son état ouvert lorsque cette tension ne dépasse pas le seuil Vₛ. On peut aussi en variante utiliser plusieurs transistors, comme dans le brevet US-7747415-B1 précité.

En variante, le circuit RC formé de la résistance 212 et du condensateur 214 est omis.

Dans une variante simplifiée, le système électrique 22 ne comporte qu'un seul ou qu'un nombre limité des circuits de traitement décrits. Par exemple, le circuit de traitement 72 ou 78 est omis.

## Revendications

1. Système électrique (22), comportant :
- un générateur (30) primaire d'impulsions électriques, apte à générer une pluralité d'impulsions électriques entre des bornes de raccordement (100,102) ;
- une batterie (70) électrique rechargeable capable de stocker une quantité d'énergie électrique plusieurs fois supérieure à l'énergie électrique contenue dans une seule impulsion générée par le générateur primaire, cette batterie étant équipée de deux bornes (124,70) raccordées électriquement aux bornes du générateur primaire pour accumuler au moins une partie de l'énergie électrique contenue dans les impulsions générées ;
- une charge électrique (74) apte à être alimentée par la batterie pour fonctionner,
- un premier circuit de traitement (72), apte à réaliser une opération en réponse à chaque impulsion générée par le générateur primaire ;
- une première inductance (80) raccordée électriquement en série entre une borne (100) du générateur primaire et une borne de la batterie (124) ;
- un générateur (76) secondaire d'impulsions électriques comprenant une seconde inductance (130) électriquement raccordée au premier circuit de traitement, cette seconde inductance étant couplée magnétiquement avec la première inductance pour former un transformateur (132) apte à transférer une partie seulement de l'énergie électrique contenue dans une impulsion électrique du générateur primaire vers le premier circuit de traitement, et
- le premier circuit de traitement étant uniquement alimenté électriquement à partir des impulsions électriques générées par le générateur secondaire, à cet effet la consommation électrique du premier circuit de traitement pour réaliser complètement ladite opération étant inférieure à l'énergie électrique de chaque impulsion générée par le générateur secondaire,
**caractérisé en ce que** :
- la charge électrique (74) est apte à basculer de façon réversible entre :
• un état alimenté dans lequel la charge consomme l'énergie électrique stockée dans la batterie pour fonctionner, et
• un état de veille dans lequel la charge est électriquement isolée de la batterie ;
- le générateur secondaire comprend un condensateur (140), la seconde inductance étant électriquement raccordée à ce condensateur pour charger ce condensateur;
- le premier circuit de traitement (72) est agencé pour réaliser l'opération suivante en réponse à chaque impulsion du générateur primaire :
• comparer la tension entre les bornes de la batterie avec un seuil prédéterminé, puis
• autoriser le basculement de la charge (74) de son état de veille vers son état alimenté, si la tension entre les bornes de la batterie est supérieure au seuil prédéterminé et, sinon, à inhiber le basculement de la charge de son état de veille vers son état alimenté ;
le premier circuit de traitement étant à cet effet :
• électriquement raccordé au condensateur (140) pour être uniquement alimenté par l'énergie stockée dans ce condensateur, et
• muni d'un interrupteur (180) équipé d'une électrode (182) de commande, cet interrupteur étant apte, en réponse à la réception sur son électrode de commande d'une quantité d'énergie électrique inférieure à celle stockable dans le condensateur, à commuter :
∘ d'un état ouvert dans lequel il isole électriquement le premier circuit de traitement d'au moins l'une des bornes de la batterie, vers
∘ un état fermé dans lequel il raccorde électriquement le premier circuit de traitement entre les bornes de la batterie pour comparer la tension entre ces bornes au seuil prédéterminé,
l'électrode de commande étant électriquement raccordée au condensateur du générateur secondaire pour commuter l'interrupteur de son état ouvert vers son état fermé en réponse à la charge de ce condensateur puis pour commuter l'interrupteur de son état fermé vers son état ouvert en réponse à la décharge de ce condensateur.

2. Système selon la revendication 1, dans lequel le système électrique comporte un second circuit (78) de traitement agencé pour réaliser l'opération suivante en réponse à chaque impulsion du générateur primaire : enregistrer des données, le second circuit de traitement comportant à cet effet une mémoire (152) non volatile, ce second circuit de traitement étant uniquement alimenté électriquement à partir des impulsions électriques générées par le générateur secondaire, à cet effet la consommation électrique du premier et du second circuits de traitement pour réaliser complètement leurs opérations respectives étant inférieure à l'énergie électrique de chaque impulsion générée par le générateur secondaire.

3. Système selon la revendication 2, dans lequel la charge (74) à alimenter comporte un microprocesseur (164) apte à exécuter, automatiquement et uniquement lorsque la charge est dans l'état alimenté, un traitement des données enregistrées dans la mémoire (152) non volatile.

4. Système selon l'une quelconque des revendications précédentes, dans lequel le premier ou le second circuit de traitement est apte à basculer, en réponse à chaque impulsion générée par le générateur primaire :
• depuis un état inactif, dans lequel il ne fonctionne pas et ne consomme pas d'énergie électrique,
• vers un état actif, dans lequel il est alimenté et exécute complètement ladite opération à réaliser avant de basculer à nouveau dans l'état inactif dès qu'il a consommé toute l'énergie électrique contenue dans l'impulsion générée par le générateur secondaire.

5. Système selon la revendication 4, dans lequel la consommation électrique du ou de tous les circuits de traitement pour réaliser complètement leurs opérations respectives est supérieure ou égale à 0,5 fois l'énergie électrique contenue dans une impulsion fournie par le générateur secondaire.

6. Système selon l'une quelconque des revendications précédentes, dans lequel le générateur (30) primaire comporte un transducteur piézoélectrique (56) raccordé électriquement entre les bornes du générateur primaire pour générer lesdites impulsions, le transducteur piézoélectrique étant apte à générer une impulsion électrique lorsqu'il subit une contrainte mécanique.

7. Système selon la revendication 6, dans lequel le générateur (30) primaire comporte un convertisseur d'énergie (50), incluant :
• le transducteur piézoélectrique (54, 56), et
• un transducteur magnétique (52) fixé sans degré de liberté au transducteur piézoélectrique, ce transducteur magnétique comportant un matériau magnétostrictif apte à convertir une variation d'un champ magnétique en une contrainte exercée sur le transducteur piézoélectrique.

8. Dispositif de comptage (2) pour mesurer la quantité d'un fluide (4) circulant dans une conduite (6), comportant :
- un débitmètre (20) configuré pour mesurer la quantité d'un fluide circulant dans une conduite, ce débitmètre étant apte à mettre en mouvement une pièce mécanique mobile, avec une amplitude prédéterminée, en réponse à un déplacement d'une quantité prédéterminée du fluide dans la conduite ;
- un système (22) électrique pour mémoriser la valeur de la quantité de fluide mesurée par le débitmètre,
**caractérisé en ce que** le système électrique est un système électrique conforme à la revendication 2, le générateur (30) d'impulsions de ce système électrique étant apte à générer des impulsions électriques en réponse au mouvement de la pièce mécanique mobile.

## Patentansprüche

1. Elektrisches System (22), umfassend:
- einen primären Generator (30) von elektrischen Impulsen, der geeignet ist, eine Vielzahl von elektrischen Impulsen zwischen Anschlussklemmen (100, 102) zu erzeugen;
- eine aufladbare elektrische Batterie (70), die geeignet ist, eine Menge an elektrischer Energie zu speichern, die um viele Male größer als die elektrische Energie ist, die in einem einzigen vom primären Generator erzeugten Impuls enthalten ist, wobei diese Batterie mit zwei Klemmen (124, 70) ausgestattet ist, die elektrisch an die Klemmen des primären Generators angeschlossen sind, um mindestens einen Teil der in den erzeugten Impulsen enthaltenen elektrischen Energie zu speichern;
- eine elektrische Last (74), die geeignet ist, von der Batterie gespeist zu werden, um zu funktionieren,
- eine erste Bearbeitungsschaltung (72), die geeignet ist, einen Vorgang als Antwort auf jeden vom primären Generator erzeugten Impuls durchzuführen;
- eine erste Induktanz (80), die elektrisch in Serie zwischen einer Klemme (100) des primären Generators und einer Klemme der Batterie (124) angeschlossen ist;
- einen sekundären Generator (76) von elektrischen Impulsen, umfassend eine zweite Induktanz (130), die elektrisch an die erste Bearbeitungsschaltung angeschlossen ist, wobei diese zweite Induktanz magnetisch mit der ersten Induktanz gekoppelt ist, um einen Transformator (132) zu bilden, der geeignet ist, nur einen Teil der elektrischen Energie, die in einem elektrischen Impuls des primären Generators enthalten ist, zu der ersten Bearbeitungsschaltung weiterzuleiten, und
- wobei die erste Bearbeitungsschaltung elektrisch nur von elektrischen Impulsen gespeist wird, die von dem sekundären Generator erzeugt werden, wobei zu diesem Zweck der elektrische Verbrauch der ersten Bearbeitungsschaltung, um den Vorgang vollständig durchzuführen, niedriger als die elektrische Energie jedes von dem sekundären Generator erzeugten Impulses ist,
**dadurch gekennzeichnet, dass**:
- die elektrische Last (74) geeignet ist, auf umkehrbare Weise zu schwenken zwischen:
• einem gespeisten Zustand, in dem die Last die in der Batterie gespeicherte elektrische Energie verbraucht, um zu funktionieren, und
• einem Standby-Zustand, in dem die Last von der Batterie elektrisch isoliert ist;
- der sekundäre Generator einen Kondensator (140) umfasst, wobei die zweite Induktanz elektrisch an diesen Kondensator angeschlossen ist, um diesen Kondensator aufzuladen;
- die erste Bearbeitungsschaltung (72) dazu vorgesehen ist, den folgenden Vorgang als Antwort auf jeden Impuls des primären Generators durchzuführen:
• Vergleichen der Spannung zwischen den Klemmen der Batterie mit einer vorbestimmten Grenze, dann
• Gestatten des Schwenkens der Last (74) von ihrem Standby-Zustand in ihren gespeisten Zustand, wenn die Spannung zwischen den Klemmen der Batterie größer als die vorbestimmte Grenze ist, und andernfalls Verhindern des Schwenkens der Last von ihrem Standby-Zustand in ihren gespeisten Zustand;
wobei die erste Bearbeitungsschaltung zu diesem Zweck:
• elektrisch an den Kondensator (140) angeschlossen ist, um nur mit der in diesem Kondensator gespeicherten Energie gespeist zu werden, und
• mit einem Schalter (180) versehen ist, der mit einer Steuerelektrode (182) ausgestattet ist, wobei dieser Schalter geeignet ist, als Antwort auf den Erhalt einer geringeren Menge an elektrischer Energie als der in dem Kondensator speicherbaren an seiner Steuerelektrode umzuschalten:
o von einem offenen Zustand, in dem er die erste Bearbeitungsschaltung von mindestens einer der Klemmen der Batterie elektrisch isoliert, zu
o einem geschlossenen Zustand, in dem er die erste Bearbeitungsschaltung zwischen den Klemmen der Batterie elektrisch anschließt, um die Spannung zwischen diesen Klemmen mit der vorbestimmten Grenze zu vergleichen,
wobei die Steuerelektrode elektrisch an den Kondensator des sekundären Generators angeschlossen ist, um den Schalter von seinem offenen Zustand in seinen geschlossenen Zustand als Antwort auf das Aufladen dieses Kondensators umzuschalten, dann um den Schalter von seinem geschlossenen Zustand in seinen offenen Zustand als Antwort auf das Entladen dieses Kondensators umzuschalten.

2. System nach Anspruch 1, bei dem das elektrische System eine zweite Bearbeitungsschaltung (78) umfasst, die dazu vorgesehen ist, den folgenden Vorgang als Antwort auf jeden Impuls des primären Generators durchzuführen: Aufzeichnen der Daten, wobei die zweite Bearbeitungsschaltung zu diesem Zweck einen nicht flüchtigen Speicher (152) umfasst, wobei diese zweite Bearbeitungsschaltung elektrisch nur von elektrischen Impulsen gespeist wird, die von dem sekundären Generator erzeugt werden, wobei zu diesem Zweck der elektrische Verbrauch der ersten und der zweiten Bearbeitungsschaltung, um ihre jeweiligen Vorgänge vollständig durchzuführen, niedriger als die elektrische Energie jedes von dem sekundären Generator erzeugten Impulses ist.

3. System nach Anspruch 2, bei dem die zu speisende Last (74) einen Mikroprozessor (164) umfasst, der geeignet ist, automatisch und nur, wenn die Last im gespeisten Zustand ist, eine Bearbeitung der in dem nicht flüchtigen Speicher (152) aufgezeichneten Daten durchzuführen.

4. System nach einem der vorhergehenden Ansprüche, bei dem die erste oder die zweite Bearbeitungsschaltung geeignet ist, als Antwort auf jeden von dem primären Generator erzeugten Impuls zu schwenken:
• von einem inaktiven Zustand, in dem es nicht funktioniert und keine elektrische Energie verbraucht,
• in einen aktiven Zustand, in dem es gespeist wird und vollständig den durchzuführenden Vorgang ausführt, bevor es wieder in den inaktiven Zustand schwenkt, sobald es die gesamte elektrische Energie verbraucht hat, die in dem von dem sekundären Generator erzeugten Impuls enthalten ist.

5. System nach Anspruch 4, bei dem der elektrische Verbrauch der oder aller Bearbeitungsschaltungen zur vollständigen Durchführung ihrer jeweiligen Vorgänge höher oder gleich 0,5-mal die elektrische Energie, die in einem von dem sekundären Generator gelieferten Impuls enthalten ist, ist.

6. System nach einem der vorhergehenden Ansprüche, bei dem der primäre Generator (30) einen piezoelektrischen Transducer (56) umfasst, der elektrisch zwischen den Klemmen des primären Generators angeschlossen ist, um die Impulse zu erzeugen, wobei der piezoelektrische Transducer geeignet ist, einen elektrischen Impuls zu erzeugen, wenn er einer mechanischen Spannung ausgesetzt ist.

7. System nach Anspruch 6, bei dem der primäre Generator (30) einen Energiewandler (50) umfasst, einschließlich:
• des piezoelektrischen Transducers (54, 56), und
• eines magnetischen Transducers (52), der ohne Freiheitsgrad am piezoelektrischen Transducer befestigt ist, wobei dieser magnetische Transducer ein magnetostriktives Material umfasst, das geeignet ist, eine Variation eines Magnetfeldes in eine auf den piezoelektrischen Transducer ausgeübte Spannung umzuwandeln.

8. Zählvorrichtung (2) zum Messen der Menge eines in einer Leitung (6) zirkulierenden Fluids (4), umfassend:
- einen Durchflussmesser (20), der eingerichtet ist, um die Menge eines in einer Leitung zirkulierenden Fluids zu messen, wobei dieser Durchflussmesser geeignet ist, ein bewegliches mechanisches Stück mit einer vorbestimmten Amplitude als Antwort auf eine Verlagerung einer vorbestimmten Menge des Fluids in der Leitung in Bewegung zu versetzen;
- ein elektrisches System (22), um den Wert der vom Durchflussmesser gemessenen Fluidmenge zu speichern,
**dadurch gekennzeichnet, dass** das elektrische System ein elektrisches System nach Anspruch 2 ist, wobei der Impulsgenerator (30) dieses elektrischen Systems geeignet ist, elektrische Impulse als Antwort auf die Bewegung des beweglichen mechanischen Stücks zu erzeugen.

## Claims

1. Electrical system (22), including:
- a primary electrical pulse generator (30), able to generate a plurality of electrical pulses between connection terminals (100,102);
- a rechargeable electric battery (70) capable of storing an amount of electrical energy several times greater than the electrical energy contained in a single pulse generated by the primary generator, this battery being equipped with two terminals (124,70) that are electrically connected to the terminals of the primary generator so as to accumulate at least some of the electrical energy contained in the pulses that are generated;
- an electrical load (74) able to be powered by the battery so as to operate,
- a first processing circuit (72), able to perform an operation in response to each pulse generated by the primary generator;
- a first inductor (80) electrically connected in series between a terminal (100) of the primary generator and a terminal of the battery (124);
- a secondary electrical pulse generator (76) comprising a second inductor (130) electrically connected to the first processing circuit, this second inductor being magnetically coupled to the first inductor so as to form a transformer (132) able to transfer only some of the electrical energy contained in an electrical pulse from the primary generator to the first processing circuit, and
- the first processing circuit being electrically powered only from the electrical pulses generated by the secondary generator, the electrical consumption of the first processing circuit to perform said operation completely to this end being less than the electrical energy of each pulse generated by the secondary generator,
**characterized in that**:
- the electrical load (74) is able to switch reversibly between:
• a powered state in which the load consumes the electrical energy stored in the battery so as to operate, and
• a standby state in which the load is electrically isolated from the battery;
- the secondary generator comprises a capacitor (140), the second inductor being electrically connected to this capacitor so as to charge this capacitor;
- the first processing circuit (72) is designed to perform the following operation in response to each pulse from the primary generator:
• compare the voltage between the terminals of the battery with a predetermined threshold, and then
• authorize switching of the load (74) from its standby state to its powered state if the voltage between the terminals of the battery is greater than the predetermined threshold and, if not, to prohibit switching of the load from its standby state to its powered state;
the first processing circuit to this end being:
• electrically connected to the capacitor (140) so as to be powered only by the energy stored in this capacitor, and
• provided with a switch (180) equipped with a control electrode (182), this switch being able, in response to the reception, on its control electrode, of an amount of electrical energy less than that able to be stored in the capacitor, to switch:
∘ from an open state in which it electrically isolates the first processing circuit from at least one of the terminals of the battery, to
∘ a closed state in which it electrically connects the first processing circuit between the terminals of the battery so as to compare the voltage between these terminals with the predetermined threshold,
the control electrode being electrically connected to the capacitor of the secondary generator so as to switch the switch from its open state to its closed state in response to the charging of this capacitor, and then to switch the switch from its closed state to its open state in response to the discharging of this capacitor.

2. System according to Claim 1, wherein the electrical system includes a second processing circuit (78) designed to perform the following operation in response to each pulse from the primary generator: record data, the second processing circuit to this end including a non-volatile memory (152), this second processing circuit being electrically powered only from the electrical pulses generated by the secondary generator, the electrical consumption of the first and of the second processing circuit to perform their respective operations completely to this end being less than the electrical energy of each pulse generated by the secondary generator.

3. System according to Claim 2, wherein the load (74) to be powered includes a microprocessor (164) able to execute, automatically and only when the load is in the powered state, processing of the data recorded in the non-volatile memory (152).

4. System according to any one of the preceding claims, wherein the first or the second processing circuit is able to switch, in response to each pulse generated by the primary generator:
• from an inactive state, in which it does not operate and does not consume electrical energy,
• to an active state, in which it is powered and executes said operation to be performed completely before switching back to the inactive state as soon as it has consumed all of the electrical energy contained in the pulse generated by the secondary generator.

5. System according to Claim 4, wherein the electrical consumption of the or of all of the processing circuits to perform their respective operations completely is greater than or equal to 0.5 times the electrical energy contained in a pulse supplied by the secondary generator.

6. System according to any one of the preceding claims, wherein the primary generator (30) includes a piezoelectric transducer (56) electrically connected between the terminals of the primary generator so as to generate said pulses, the piezoelectric transducer being able to generate an electrical pulse when it is subjected to a mechanical stress.

7. System according to Claim 6, wherein the primary generator (30) includes an energy converter (50), including:
• the piezoelectric transducer (54, 56), and
• a magnetic transducer (52) attached without any degree of freedom to the piezoelectric transducer, this magnetic transducer including a magnetostrictive material able to convert a variation in a magnetic field into a stress exerted on the piezoelectric transducer.

8. Metering device (2) for measuring the amount of a fluid (4) flowing in a pipe (6), including:
- a flowmeter (20) configured to measure the amount of a fluid flowing in a pipe, this flowmeter being able to set into motion a mobile mechanical component, with a predetermined amplitude, in response to a movement of a predetermined amount of the fluid in the pipe;
- an electrical system (22) for storing the value of the amount of fluid measured by the flowmeter,
**characterized in that** the electrical system is an electrical system according to Claim 2, the pulse generator (30) of this electrical system being able to generate electrical pulses in response to the motion of the mobile mechanical component.
